# EUROPÄISCHE PATENTSCHRIFT

(11) **EP 1 407 160 B1**
(45) Veröffentlichungstag und Bekanntmachung des Hinweises auf die Patenterteilung: **10.10.2007**
(21) Anmeldenummer: 02751116.1
(22) Anmeldetag: 06.07.2002
(51) Int. Cl.: F16D 65/092

(54) **BREMSBACKE, INSBESONDERE FÜR EINE SCHEIBENBREMSE**
BRAKE SHOE, ESPECIALLY FOR A DISC BRAKE
SEGMENT DE FREIN EN PARTICULIER POUR UN FREIN A DISQUE

(30) Priorität: 13.07.2001 DE 10134067
(43) Veröffentlichungstag der Anmeldung: 14.04.2004
(73) Patentinhaber: TMD Friction GmbH, 51381 Leverkusen (DE)
(72) Erfinder: BRECHT, Jörg, 51519 Odenthal (DE); DOHLE, Achim, 51375 Leverkusen (DE); HOFFRICHTER, Wolfgang, 51061 Köln (DE)
(74) Vertreter: Müller, Eckhard
(86) Internationale Anmeldenummer: PCT/EP2002/007552
(87) Internationale Veröffentlichungsnummer: WO 2003/006843

(56) Entgegenhaltungen:
- DE-A- 3 333 670
- DE-A- 19 635 838
- DE-A- 19 754 740
- DE-C- 19 602 888
- DE-C- 19 905 529
- PATENT ABSTRACTS OF JAPAN vol. 011, no. 323 (M-634), 21. Oktober 1987 (1987-10-21) & JP 62 106132 A (TOYOTA MOTOR CORP), 16. Mai 1987 (1987-05-16)

## Beschreibung

Die Erfindung betrifft eine Bremsbacke nach dem Oberbegriff des Anspruchs 1.

Derartige Bremsbacken sind insbesondere für Scheibenbremsen in Kraftfahrzeugen geeignet und weisen eine Trägerplatte aus Metall auf, auf der ein Reibbelag vorzugsweise durch Kleben befestigt ist. Zwischen dem Reibbelag und der Trägerplatte kann eine Zwischenschicht angeordnet sein, die einerseits schwingungsdämpfend wirkt und andererseits den Reibbelag mit der Trägerplatte verklebt.

Beim Bremsvorgang kommt es aufgrund der aufeinander einwirkenden Elemente einer Bremsanlage, z.B. den Bremsbacken, der Bremsscheibe und der Bremsbackenführung zu Schwingungen des Gesamtsystems, die zu unerwünschten Geräuschen und Vibrationen führen können.

Zur Dämpfung dieser Schwingungen ist es bereits bekannt, eine Dämpfungsplatte auf die Rückseite einer Trägerplatte aufzukleben.

Aus der DE 44 35 669 A ist es ferner bekannt, an den den Bremsbackenführungen anliegenden Seitenkanten einer Trägerplatte Dämpfungsmittel in Form eines Schlitzes vorzusehen.

Weitere geräuschdämpfend ausgeführte Bremsbacken sind z.B. aus DE 19 635 838, DE 19 905 529 oder DE 3 333 670 bekannt.

Bei bekannten Bremsbacken treten beim Bremsen unerwünschte Begleiterscheinungen auf, die vom Verschleißzustand der Bremsbacken abhängen. Beispielsweise ist bekannt, dass die Bremsbacken mit zunehmenden Verschleiß zu einer erhöhten Bremsgeräuschbildung beitragen, da die Reibbeläge mit zunehmendem Alter mit Hitzebelastung härter werden und an Kompressibilität abnehmen. Dadurch können sich die Reibbeläge weniger an die Bremsscheiben anpassen, die sich unter Wärmeeinfluss geometrisch verändern können.

Die auftretenden Geräusche lassen sich wie folgt charakterisieren:
Knautschen (breitbandiges Geräusch: 200 Hz bis 8 kHz),
Quietschen (1500 Hz bis 15 kHz),
Rubbeln (20 Hz bis 100 Hz),
Brummen (20 Hz bis 600 Hz), sowie
wire-brush-Geräusche.

Rubbeleffekte wie Lenkraddrehschwingungen und Bremspedalpulsieren, sowie Brummen können sich mit zunehmendem Verschleißzustand verstärken.

Der Erfindung liegt die Aufgabe zugrunde, eine Bremsbacke zu schaffen, durch die die Geräuschentwicklung und die Schwingungsübertragung auf andere Fahrzeugelemente verringert werden kann.

Zur Lösung dieser Aufgabe dienen die Merkmale des Anspruchs 1.

Die Erfindung sieht in vorteilhafter Weise vor, dass die Trägerplatte aus mehreren miteinander verbundenen oder separaten Plattenteilen gebildet ist, von denen mindestens ein Plattenteil den Reibbelag trägt, der relativ zu dem mindestens einen weiteren Plattenteil zum Verhindern von Reibungsschwingungen beim Bremsen elastisch oder viskoelastisch gelagert ist.

Nach der Erfindung ist demzufolge vorgesehen, dass die Trägerplatte aus mehreren Plattenteilen gebildet ist, die elastisch oder viskoelastisch miteinander verbunden sind. Auf diese Weise können sich die in dem Plattenteil mit dem Reibbelag induzierten Schwingungen nur in hohem Maße gedämpft auf den anderen Plattenteil übertragen, der mit den Führungselementen der Bremse gekoppelt ist. Die Erfindung ermöglicht die Entkopplung der tangentialen und axialen Reibkräfte und deren niederfrequente und hochfrequente Schwankungen, mit der Folge, dass eine geringere Geräusch- und Vibrationsentwicklung erzielt werden kann.

Die Erfindung ermöglicht es, Reibbeläge mit geringer Steifigkeit und hohen Dämpfungseigenschaften in Richtung der Reibkräfte einzusetzen, ohne dass der Nachteil einer zu hohen Kompressibilität in Druckrichtung des Bremskolbens in Kauf genommen werden muss.

Vorzugsweise ist vorgesehen, dass die Trägerplatte aus zwei miteinander elastisch oder viskoelastisch verbundenen Plattenteilen gebildet ist. Dabei ist ein innerer Plattenteil von einem äußeren Plattenteil umgeben. Der Reibbelag ist auf dem inneren Plattenteil befestigt, wobei die Plattenteile durch einen umlaufenden Schlitz voneinander getrennt sind.

Bei einer Ausführungsform kann auch vorgesehen sein, dass in dem Schlitz mindestens ein Verbindungssteg vorgesehen ist, der die Plattenteile miteinander verbindet. In diesem Fall besteht der innere und auch äußere Plattenteil aus einer einstückigen Trägerplatte.

Der mindestens eine Verbindungssteg kann auf der radialen Mittelachse der Trägerplatte angeordnet sein oder auf einer mittleren Tangentiallinie der Trägerplatte. Die Anordnung der Verbindungsstege hat Einfluss auf die Steifigkeit der Trägerplatte in Tangential- bzw. Radialrichtung, wobei eine Anordnung von zwei Verbindungsstegen auf der radialen Mittelachse der Trägerplatte bevorzugt ist. Die Orientierung der Verbindungsstege beeinflusst das Dämpfungs- und Schwingungsverhalten in Radial- und Tangentialrichtung, wobei die Verbindungsstege die Plattenteile elastisch miteinander verbinden.

Bei einem Ausführungsbeispiel ist vorgesehen, dass der Reibbelag ausschließlich mit dem inneren Plattenteil verbunden ist. Bei diesem Ausführungsbeispiel kann der Reibbelag keine Schwingungen direkt auf den äußeren Plattenteil übertragen.

Bei einer alternativen Ausführungsform ist vorgesehen, dass der Reibbelag mit beiden Plattenteilen verbunden ist und somit den Schlitz oder Spalt zwischen den beiden Plattenteilen überdeckt.

Dabei kann auch vorgesehen sein, dass der innere und der äußere Plattenteil ausschließlich über den Reibbelag elastisch oder viskoelastisch miteinander verbunden sind.

Bei einem bevorzugten Ausführungsbeispiel ist vorgesehen, dass der den Reibbelag tragende Plattenteil über ein elastisches Zwischenelement mit dem mindestens einen weiteren Plattenteil verbunden ist. Dieses Zwischenelement ist in dem Spalt oder Schlitz zwischen den beiden Plattenteilen angeordnet und ermöglicht eine hohe Dämpfung der über den Reibbelag aufgenommenen oder erzeugten Schwingungen.

Das Zwischenelement kann aus einem Elastomermaterial, aus dem Reibmaterial selbst oder wenn zwischen Reibbelag und Trägerplatte eine Zwischenschicht angeordnet ist aus einem Zwischenschichtwerkstoff bestehen. Wenn das Zwischenelement aus Reibmaterial oder aus Zwischenschichtwerkstoff besteht, kann dieses beim Aufpressen des Reibbelages in den Zwischenraum zwischen die beiden Plattenteile hineingepresst werden.

Bei einer weiteren Alternative ist vorgesehen, dass das Zwischenelement aus mindestens einem metallischen Federelement gebildet ist.

Bevorzugt ist der innere Plattenteil über einen umlaufenden Schlitz von dem äußeren Plattenteil getrennt. Dieser Schlitz ist durchgängig und weist eine gleichbleibende Breite auf.

Bei einem weiteren Ausführungsbeispiel ist vorgesehen, dass die Trägerplatte eine beide Plattenteile überdeckende, aufgeklebte Dämpfungsplatte aufweist und dass die Klebeschicht zwischen der Dämpfungsplatte und den Plattenteilen den inneren Plattenteil viskoelastisch lagert. Der Zwischenraum zwischen den Plattenteilen kann dabei zusätzlich das elastische oder viskoelastische Zwischenelement aufnehmen.

Beispielsweise kann das Zwischenelement aus einem in den Schlitz eingesetzten Elastomerring bestehen.

Bei einem weiteren Ausführungsbeispiel ist vorgesehen, dass zwischen der Trägerplatte und dem Reibbelag eine Zwischenschicht angeordnet ist und dass der Schlitz mit dem Zwischenschichtwerkstoff als elastisches Zwischenelement ausgefüllt ist.

Im folgenden werden unter Bezugnahme auf die Zeichnungen Ausführungsbeispiele der Erfindung näher erläutert.

Es zeigen:
- Fig. 1: ein erstes Ausführungsbeispiel einer Trägerplatte mit separaten Plattenteilen,
- Fig. 2: das Ausführungsbeispiel der Fig. 1 mit aufgeklebtem Reibbelag,
- Fig. 3: ein zweites Ausführungsbeispiel gemäß Fig. 1 mit auf einer radialen Symmetrieachse angeordneten Stegen,
- Fig. 4: ein Ausführungsbeispiel gemäß Fig. 1 mit auf einer tangentialen Mittellinie angeordneten Stegen,
- Fig. 5: ein Schnitt entlang der Linie V-V in Fig. 2,
- Fig. 6: ein weiteres Ausführungsbeispiel im Schnitt, bei dem der Reibbelag beide Plattenteile überdeckt,
- Fig. 7: ein Ausführungsbeispiel mit Dämpfungsplatte,
- Fig. 8: ein Ausführungsbeispiel mit Zwischenschicht,
- Fig. 9: eine Trägerplatte mit drei Plattenteilen, und
- Fig. 10: die Anordnung eines metallischen Federelementes zwischen den Plattenteilen.

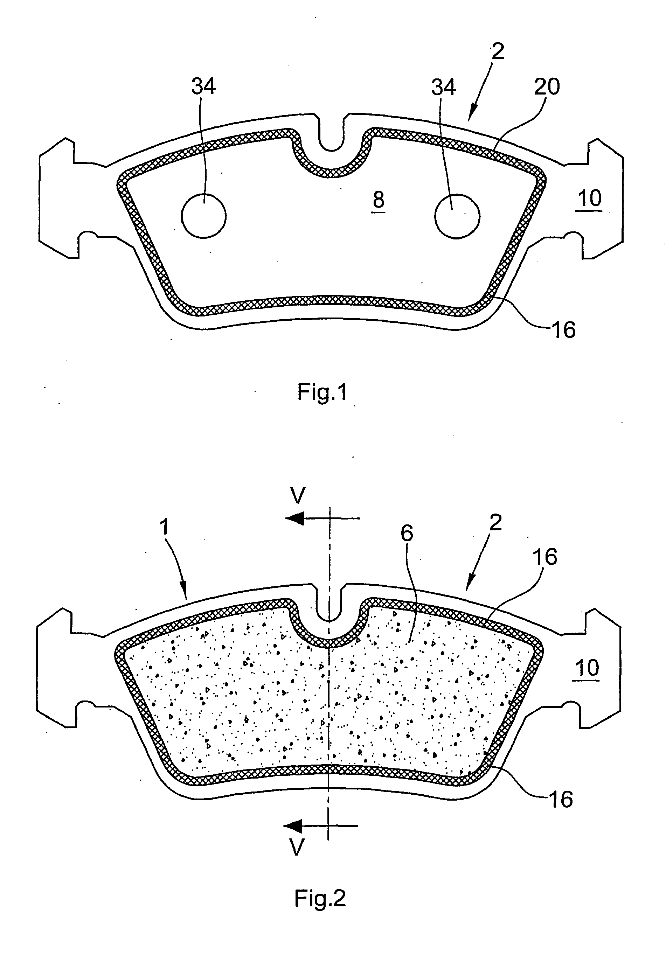

Fig. 1 zeigt eine Trägerplatte 2 für eine Bremsbacke in Schreibenbremsen von Kraftfahrzeugen. Die Trägerplatte 2 ist aus zwei Plattenteilen 8,10 gebildet, wobei der äußere Plattenteil 10 den inneren Plattenteil 8 umgibt. Ein Schlitz gleichbleibender Breite trennt die beiden Plattenteile. Der Schlitz 20 kann ein Zwischenelement 16 aufweisen, das die beiden Plattenteile 8,10 elastisch oder viskoelastisch verbindet. Die Trägerplatte 2 besteht vorzugsweise aus Metall, kann aber auch aus einem geeigneten ggf. faserverstärkten Kunststoff bestehen. Desweiteren besteht die Möglichkeit, dass der innere Plattenteil 8 aus einem anderen Material besteht als der äußere Plattenteil 10. Insbesondere könnte der innere Plattenteil 8 aus Kunststoffmaterial und der äußere Plattenteil 10 aus Metall bestehen.

Fig. 2 zeigt eine Bremsbacke mit einer Trägerplatte gemäß Fig. 1 und einem auf das innere Plattenteil 8 aufgeklebten Reibbelag 6.

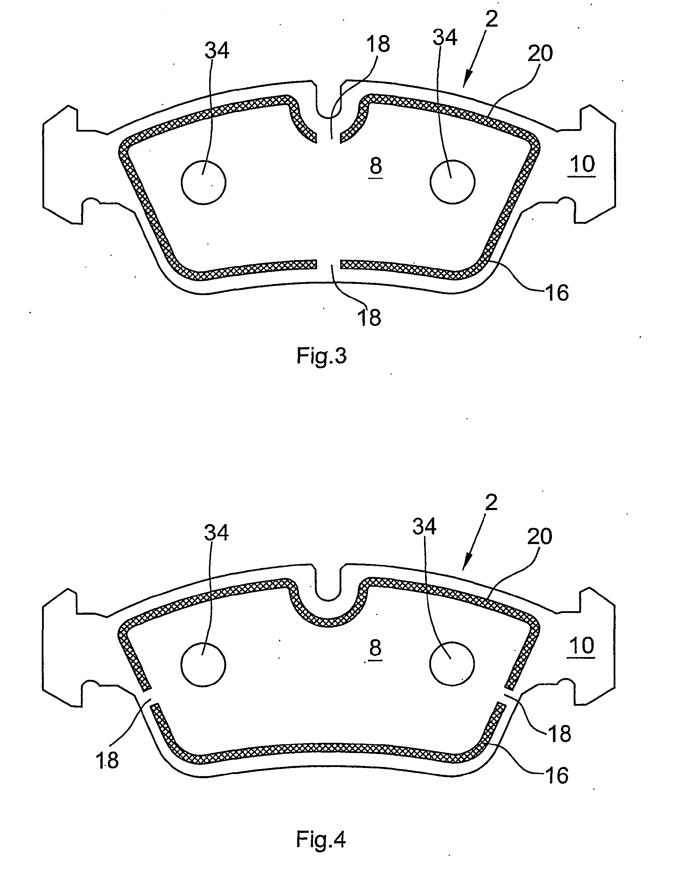

Fig. 3 zeigt eine bevorzugte Variante der Trägerplatte 2, die einstückig herstellbar ist, wobei die beiden Plattenteile 8,10 über zwei den Schlitz 20 überbrückende Stege 18 miteinander verbunden sind, die auf der radialen Symmetrieachse der Bremsbacke verlaufen. In dem Schlitz 20 kann ein Zwischenelement 16 angeordnet sein.

Ein alternatives Ausführungsbeispiel ist in Fig. 4 gezeigt, bei dem die die Plattenteile 8 und 10 verbindenden Stege 18 auf einer tangentialen Mittelinie der Bremsbacke angeordnet sind. Die Orientierung der Stege bestimmt in welche Richtung der innere Plattenteil bevorzugt schwingen kann.

Während das Ausführungsbeispiel der Fig. 3 bevorzugt Schwingungen in Tangentialrichtung zulässt, kann der innere Plattenteil 8 gemäß Fig. 4 eher in Radialrichtung schwingen.

Bevorzugt ist jedenfalls das Ausführungsbeispiel der Fig. 3. Die Fign. 3 und 4 zeigen Ausführungsformen bei denen der innere Plattenteil 8 über zwei Stege 18 mit dem äußeren Plattenteil 10 verbunden ist. Es versteht sich, dass der innere Plattenteil 8 auch nur mit einem einzigen Steg 18 mit dem äußeren Plattenteil 10 verbunden sein kann. Aufgrund der Einstückigkeit der Trägerplatte 2 bei den Ausführungsbeispielen der Fign. 3 und 4 besteht die Trägerplatte 2 aus einem einheitlichen Material.

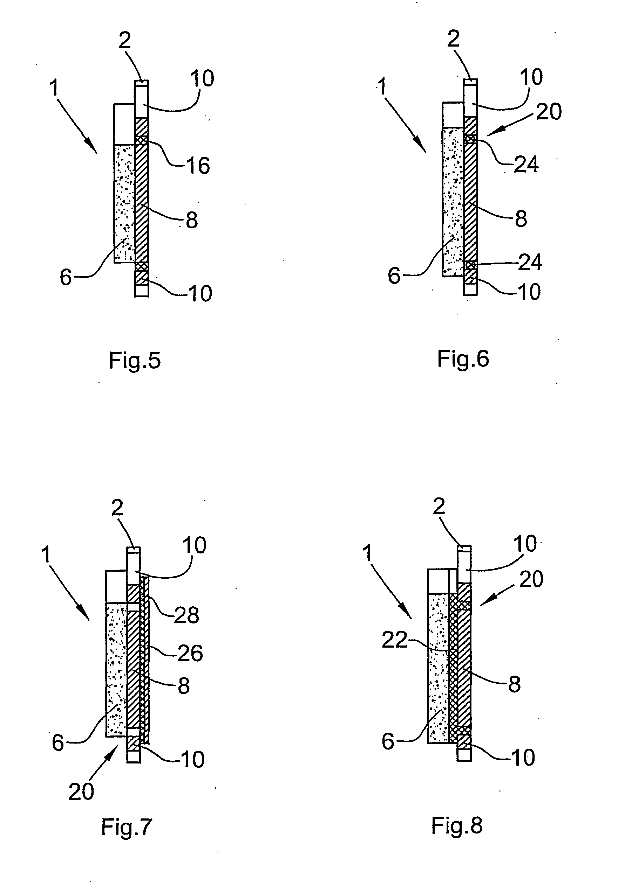

Fig. 5 zeigt einen Querschnitt entlang der Linie V-V in Fig. 2. Bei diesem Ausführungsbeispiel ist vorgesehen, dass ein Zwischenelement 16 in dem Schlitz 20 angeordnet ist und dass der Reibbelag 6 nur auf dem inneren Plattenteil 8 aufgeklebt ist. Dagegen ist bei dem Ausführungsbeispiel der Fign. 6 und 8 vorgesehen, dass der Reibbelag 6 beide Plattenteile 8,10 überdeckt. Da nach dem Ausführungsbeispiel der Fig. 6 der Reibbelag auch mit dem Plattenteil 10 verklebt ist, kann auf ein Zwischenelement 16 in dem Schlitz 20 verzichtet werden. In der Zeichnung ist in dem Schlitz 20 ein Elastomerring 24 eingezeichnet, der allerdings nicht zwingend erforderlich ist.

Bei dem Ausführungsbeispiel der Fig. 7 verbindet eine Dämpfungsplatte 26 die über eine Klebeschicht 28 mit der Trägerplatte 2 verklebt ist, die Plattenteile 8,10 und schafft damit die elastische oder viskoelastische Kopplung der beiden Plattenteile. Der Reibbelag kann wie in Fig. 5 gezeigt, nur auf dem inneren Plattenteil 8 angeordnet sein, den Schlitz 20 wie in Fig. 7 gezeigt überdecken, oder auch beide Plattenteile 8,10 übergreifen. Dabei versteht es sich, dass der Reibbelag 6 mit dem Plattenteil 10 nur in einem Randbereich verklebt ist.

Bei einer weiteren Alternative kann auch vorgesehen sein, dass der Reibbelag 6 zwar zum Teil den Plattenteil 10 überdeckt, aber mit diesem nicht verklebt ist.

Fig. 8 zeigt ein Ausführungsbeispiel bei dem eine Zwischenschicht 22 zwischen dem Reibbelag und der Trägerplatte 2 angeordnet ist. Bei diesem Ausführungsbeispiel überdeckt die Zwischenschicht 22 beide Plattenteile 8,10, wobei Zwischenschichtwerkstoff außerdem in den Schlitz 20 zwischen die Plattenteile 8,10 eingepresst ist.

Es versteht sich, dass auch die anderen Ausführungsbeispiele der Fig. 1 bis 7 und 9 eine Zwischenschicht 22 aufweisen können, ohne dass sich Zwischenschichtmaterial in dem Schlitz 20 befinden muss.

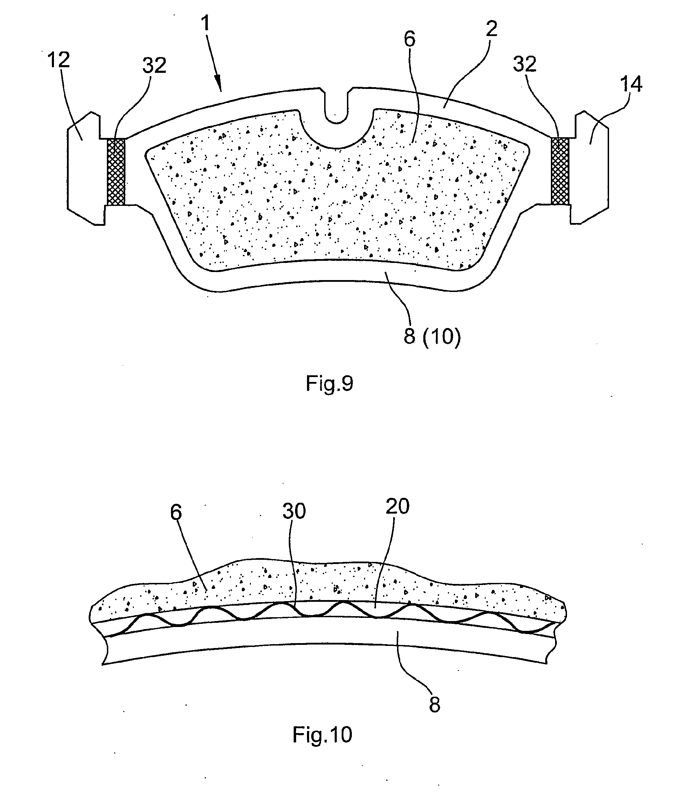

Fig. 9 zeigt ein weitere, nicht unter den Schutzumfang der Ansprüche fallende Trägerplatte 2, die aus insgesamt drei Plattenteilen 8,12,14 besteht. Der Reibbelag 6 ist auf den mittleren Plattenteil 8 aufgeklebt. Zwei spiegelsymmetrisch zu der radialen Symmetrieachse verlaufende Plattenteile 12,14 sind über ein elastisches Zwischenelement, z.B. einen Elastomerblock 32" mit dem Plattenteil 8 verbunden.

Die Trägerplatte nach Fig. 9 kann mit den Lösungsvorschlägen gemäß den Fign. 1 bis 8 kombiniert sein und demzufolge einen Schlitz 20 mit oder ohne Stege 18 und mit oder ohne Zwischenelemente 16 aufweisen, der ein inneres, das Reibelement 6 tragendes Plattenteil 8 von einem äußeren Plattenteil 10 trennt.

Wie bei dem Ausführungsbeispiel der Fig. 7 kann auch die kombination der Bremsbacke gemäß Fig. 9 mit den Lösungsvorschlägen gemäß den Figuren 1 bis 8, sowie auch alle anderen gezeigten Ausführungsbeispiele mit einer Dämpfungsplatte 26 versehen sein, die alle Plattenteile 8,12,14 überdeckt und mit einer Klebeschicht 28 mit diesen verbunden sein.

Fig. 10 zeigt ein Ausführungsbeispiel gemäß den Fign. 1 bis 8, bei dem als Zwischenelement 16 ein metallisches Federelement 30 in den Schlitz 20 zwischen den Plattenteilen 6,8 vorgesehen ist.

Bei allen Ausführungsbeispielen ist letztlich vorgesehen, dass der innere Plattenteil 8, der über den Reibbelag 6 beim Bremsen zu Schwingungen angeregt wird gegenüber dem oder den äußeren Plattenteilen 10,12,14 elastisch oder viskoelastisch gedämpft wird, um eine erheblich Reduktion der Schwingungen und Vibrationen, sowie der damit verbundenen Geräusche herbeizuführen.

Der Plattenteil 8 kann mit Löchern 34 versehen sein, die beim Verpressen mit dem Reibmaterial des Reibbelages 6 mit Reibmaterial ausgefüllt werden können, um eine bessere Verankerung des Reibbelages 6 auf dem inneren Plattenteil 8 zu bewirken.

## Patentansprüche

1. Bremsbacke, insbesondere für eine Scheibenbremse von Kraftfahrzeugen, mit einer Trägerplatte (2), auf der ein Reibbelag (6) befestigt ist, wobei die Trägerplatte (2) aus mehreren miteinander verbundenen oder separaten Plattenteilen (8, 10; 12, 14) gebildet ist, welche sich in derselben Ebene erstrecken und von denen mindestens ein Plattenteil (8) den Reibbelag (6) trägt und relativ zu dem mindestens einen weiteren Plattenteil (10; 12, 14) zum Verhindern von Reibungsschwingungen beim Bremsen elastisch oder viskoelastisch gelagert ist, **dadurch gekennzeichnet, dass** zwei Plattenteile (8, 10) vorgesehen sind, nämlich ein innerer Plattenteil (8), welcher mit dem Reibbelag (6) verbunden und von einem äußeren Plattenteil (10) umgeben ist, wobei zwischen den Plattenteilen (8, 10) ein umlaufender in Dickenrichtung der Plattenteile (8, 10) durchgängiger Schlitz (20) ausgebildet ist.

2. Bremsbacke nach Anspruch 1, **dadurch gekennzeichnet, dass** die Trägerplatte aus zwei miteinander elastisch oder viskoelastisch verbundenen Plattenteilen (8,10) gebildet ist.

3. Bremsbacke nach einem der Ansprüche 1 oder 2, **gekennzeichnet**, dass die miteinander verbundenen Plattenteile (8,10;12,14) über mindestens einen Verbindungssteg (18) miteinander gekoppelt sind.

4. Bremsbacken nach Anspruch 3, **dadurch gekennzeichnet, dass** der mindestens eine Verbindungssteg (18) auf der radialen Mittelachse der Trägerplatte (2) angeordnet ist.

5. Bremsbacke nach Anspruch 3, **dadurch gekennzeichnet, dass** der mindestens ein Verbindungssteg (18) auf einer mittleren Tangentiallinie der Trägerplatte (2) angeordnet ist.

6. Bremsbacke nach einem der Ansprüche 1 bis 5, **dadurch gekennzeichnet, dass** der Reibbelag (6) ausschließlich mit dem inneren Plattenteil (8) verbunden ist.

7. Bremsbacke nach einem der Ansprüche 1 bis 6, **dadurch gekennzeichnet, dass** der Reibbelag (6) mit beiden Plattenteilen (8, 10) verbunden ist.

8. Bremsbacke nach Anspruch 1, **dadurch gekennzeichnet, dass** der innere und der äußere Plattenteil (8,10) ausschließlich über den Reibbelag (6) miteinander verbunden sind.

9. Bremsbacke nach einem der Ansprüche 1 bis 7, **dadurch gekennzeichnet, dass** der den Reibbelag (6) tragende Plattenteil (8) über ein elastisches Zwischenelement (16) mit dem mindestens einen weiteren Plattenteil (10;12,14) verbunden ist.

10. Bremsbacke nach Anspruch 9, **dadurch gekennzeichnet, dass** das Zwischenelement (16) aus einem Elastomermaterial besteht.

11. Bremsbacke nach Anspruch 9, **dadurch gekennzeichnet, dass** das Zwischenelement (16) aus Reibmaterial besteht.

12. Bremsbacke nach Anspruch 9, **dadurch gekennzeichnet, dass** das Zwischenelement (16) aus mindestens einem metallischen Federelement (30) gebildet ist.

13. Bremsbacke nach Anspruch 1, **dadurch gekennzeichnet, dass** der innere Plattenteil (8) über den umlaufenden Schlitz (20) von dem äußeren Plattenteil (10) getrennt ist.

14. Bremsbacke nach Anspruch 1, **dadurch gekennzeichnet, dass** die Trägerplatte (2) eine beide Plattenteile (8,10) überdeckende aufgeklebte Dämpfungsplatte (26) aufweist, und dass die Klebeschicht (28) zwischen der Dämpfungsplatte (26) und den Plattenteilen (8,10) den inneren Plattenteil (8) elastisch lagert.

15. Bremsbacke nach Anspruch 13 oder 14, **dadurch gekennzeichnet, dass** der umlaufende Schlitz (20) das elastische oder viskoelastische Zwischenelement (16) aufnimmt.

16. Bremsbacke nach Anspruch 15, **dadurch gekennzeichnet, dass** das elastische Zwischenelement (16) aus einem in den Schlitz (20) eingesetzten Elastomerring (24) besteht.

17. Bremsbacke nach Anspruch 15, **dadurch gekennzeichnet, dass** zwischen der Trägerplatte (2) und dem Reibbelag (6) eine Zwischenschicht (22) angeordnet ist, und dass der Schlitz (20) mit dem Zwischenschichtwerkstoff als elastisches Zwischenelement (16) ausgefüllt ist.

18. Bremsbacke nach Anspruch 1, **dadurch gekennzeichnet, dass** zwei weitere Plattenteile (12,14) vorgesehen sind, wobei der innere Plattenteil (8) den Reibbelag (6) trägt und elastisch oder viskoelastisch mit dem äußeren, den inneren Plattenteil (8) umgebenden Plattenteil (10) verbunden ist, und dass der äußere Plattenteil (10) mit den zwei weiterens jeweils in Tangentialrichtung abstehenden Plattenteilen (12,14) über ein elastisches oder viskoelastisches Zwischenelement (16) verbunden ist.

19. Bremsbacke nach Anspruch 18, **dadurch gekennzeichnet, dass** das elastische Zwischenelement (16) aus einem die Plattenteile (8,10,12,14) verbindenden Elastomerblock (32) besteht.

20. Bremsbacke nach einem der Ansprüche 18 oder 19, **dadurch gekennzeichnet, dass** eine alle Plattenteile überdeckende Dämpfungsplatte (26) auf die Trägerplatte (2) aufgeklebt ist.

## Claims

1. Brake shoe, particularly for a disc brake of motor vehicles, with a carrier plate (2) on which a friction lining (6) is fastened, wherein the carrier plate (2) is formed from several interconnected or separate plate parts (8, 10; 12, 14), which extend in the same plane and of which at least one plate part (8) carries the friction lining (6) and is elastically or viscoelastically mounted relative to the at least one further plate part (10; 12, 14) in order to prevent friction vibrations during braking, **characterised in that** two plate parts (8, 10) are provided, namely an inner plate part (8), which is connected with the friction lining (6) and surrounded by an outer plate part (10), wherein a continuous slot (20) encircling in thickness direction of the plate parts (8, 10) is formed between the plate parts (8, 10).

2. Brake shoe according to claim 1, **characterised in that** the carrier plate is formed from two plate parts (8, 10) elastically or viscoelastically connected together.

3. Brake shoe according to one of claims 1 and 2, **characterised in that** the interconnected plate parts (8, 10; 12, 14) are coupled together by way of at least one connecting web (18).

4. Brake shoe according to claim 3, **characterised in that** the at least one connecting web (18) is arranged on the radial centre axis of the carrier plate (2).

5. Brake shoe according to claim 3, **characterised in that** the at least one connecting web (18) is arranged on a centre tangential line of the carrier plate (2).

6. Brake shoe according to one of claims 1 to 5, **characterised in that** the friction lining (6) is connected exclusively with the inner plate part (8).

7. Brake shoe according to one of claims 1 to 6, **characterised in that** the friction lining (6) is connected with both plate parts (8, 10).

8. Brake shoe according to claim 1, **characterised in that** the inner and the outer plate part (8, 10) are connected together exclusively by way of the friction lining (6).

9. Brake shoe according to one of claims 1 to 7, **characterised in that** the plate part (8) carrying the friction lining (6) is connected with the at least one further plate part (10) by way of an elastic intermediate element (16).

10. Brake shoe according to claim 9, **characterised in that** the intermediate element (16) consists of an elastomer material.

11. Brake shoe according to claim 9, **characterised in that** the intermediate element (16) consists of friction material.

12. Brake shoe according to claim 9, **characterised in that** the intermediate element (16) is formed from at least one metallic spring element (30).

13. Brake shoe according to claim 1, **characterised in that** the inner plate part (8) is separated from the outer plate part (10) by way of the encircling slot (20).

14. Brake shoe according to claim 1, **characterised in that** the carrier plate (2) comprises a glued-on damping plate (26) covering the two plate parts (8, 10) and that the glue layer (28) between the damping plate (26) and the plate parts (8, 10) elastically mounts the inner plate part (8).

15. Brake shoe according to claim 13 or 14, **characterised in that** the encircling slot (20) receives the elastic or viscoelastic intermediate element (16).

16. Brake shoe according to claim 15, **characterised in that** the elastic intermediate element (16) consists of an elastomer ring (24) inserted into the slot (20).

17. Brake shoe according to claim 15, **characterised in that** an intermediate layer (22) is arranged between the carrier plate (2) and the friction lining (6) and that the slot (20) is filled with the intermediate layer material as elastic intermediate element (16).

18. Brake shoe according to claim 1, **characterised in that** two further plate parts (12, 14) are provided, wherein the inner plate part (8) carries the friction lining (6) and is elastically or viscoelastically connected with the outer plate part (10) surrounding the inner plate part (8) and that the outer plate part (10) is connected with the two further plate parts (12, 14), which each project in tangential direction, by way of an elastic or viscoelastic intermediate element (16).

19. Brake shoe according to claim 18, **characterised in that** the elastic intermediate element (16) consists of an elastomer block (32) connecting the plate parts (8, 10, 12, 14).

20. Brake shoe according to one of claims 18 and 19, **characterised in that** a damping plate (26) covering all plate parts is glued onto the carrier plate (2).

## Revendications

1. Segment de frein, en particulier pour frein à disque de véhicules automobiles, comportant une plaque de support (2) sur laquelle est fixée une garniture de friction (6), dans lequel la plaque de support (2) est constituée de plusieurs parties de plaque raccordées les unes aux autres ou séparées (8, 10 ; 12, 14) qui s'étendent dans le même plan et dont au moins une partie de plaque (8) porte la garniture de friction (6) et est montée de manière élastique ou viscoélastique par rapport à la au moins une autre partie de plaque (10 ; 12, 14) pour empêcher des vibrations de friction lors du freinage, **caractérisé en ce que** sont prévues deux parties de plaque (8, 10), à savoir une partie de plaque interne (8), qui est raccordée à la garniture de friction (6) et entourée d'une partie de plaque externe (10), une fente (20) périphérique continue dans le sens de l'épaisseur des parties de plaque (8, 10) étant formée entre les parties de plaque (8, 10).

2. Segment de frein selon la revendication 1, **caractérisé en ce que** la plaque de support est constituée de deux parties de plaque (8, 10) raccordées l'une à l'autre de manière élastique ou viscoélastique.

3. Segment de frein selon l'une quelconque des revendications 1 ou 2, **caractérisé en ce que** les parties de plaque raccordées les unes aux autres (8,10 ; 12,14) sont couplées les unes aux autres via au moins une traverse de raccordement (18).

4. Segment de frein selon la revendication 3, **caractérisé en ce que** la au moins une traverse de raccordement (18) est agencée sur l'axe médian radial de la plaque de support (2).

5. Segment de frein selon la revendication 3, **caractérisé en ce que** la au moins une traverse de raccordement (18) est agencée sur une ligne tangentielle médiane de la plaque de support (2).

6. Segment de frein selon l'une quelconque des revendications 1 à 5, **caractérisé en ce que** la garniture de friction (6) est exclusivement raccordée à la partie de plaque interne (8).

7. Segment de frein selon l'une quelconque des revendications 1 à 6, **caractérisé en ce que** la garniture de friction (6) est raccordée aux deux parties de plaque (8, 10).

8. Segment de frein selon la revendication 1, **caractérisé en ce que** les parties de plaque interne et externe (8, 10) sont exclusivement raccordées l'une à l'autre via la garniture de friction (6).

9. Segment de frein selon l'une quelconque des revendications 1 à 7, **caractérisé en ce que** la partie de plaque (8) portant la garniture de friction (6) est raccordée, via un élément intermédiaire élastique (16), à la au moins une autre partie de plaque (10 ; 12, 14).

10. Segment de frein selon la revendication 9, **caractérisé en ce que** l'élément intermédiaire (16) est constitué d'un matériau élastomère.

11. Segment de frein selon la revendication 9, **caractérisé en ce que** l'élément intermédiaire (16) est constitué d'un matériau de friction.

12. Segment de frein selon la revendication 9, **caractérisé en ce que** l'élément intermédiaire (16) est constitué d'au moins un élément à ressort métallique (30).

13. Segment de frein selon la revendication 1, **caractérisé en ce que** la partie de plaque interne (8) est séparée de la partie de plaque externe (10) par la fente périphérique (20).

14. Segment de frein selon la revendication 1, **caractérisé en ce que** la plaque de support (2) présente une plaque d'amortissement (26) collée, recouvrant les deux parties de plaque (8, 10), et **en ce que** la couche adhésive (28) entre la plaque d'amortissement (26) et les parties de plaque (8, 10) soutient la partie de plaque interne (8) de manière élastique.

15. Segment de frein selon l'une quelconque des revendications 13 ou 14, **caractérisé en ce que** la fente périphérique (20) reçoit l'élément intermédiaire élastique ou viscoélastique (16).

16. Segment de frein selon la revendication 15, **caractérisé en ce que** l'élément intermédiaire élastique (16) est constitué d'un anneau élastomère (24) inséré dans la fente (20).

17. Segment de frein selon la revendication 15, **caractérisé en ce qu'**est agencée, entre la plaque de support (2) et la garniture de friction (6), une couche intermédiaire (22) et **en ce que** la fente (20) est remplie du matériau de couche intermédiaire comme élément intermédiaire élastique (16).

18. Segment de frein selon la revendication 1, **caractérisé en ce que** deux autres parties de plaque (12, 14) sont prévues, la partie de plaque interne (8) portant la garniture de friction (6) et étant raccordée de manière élastique ou viscoélastique à la partie de plaque externe (10) qui entoure la partie de plaque interne (8), et **en ce que** la partie de plaque externe (10) est raccordée via un élément intermédiaire élastique ou viscoélastique (16) aux deux autres parties de plaque (12, 14) dépassant respectivement dans la direction tangentielle.

19. Segment de frein selon la revendication 18, **caractérisé en ce que** l'élément intermédiaire élastique (16) est constitué d'un bloc élastomère (32) raccordant les parties de plaque (8, 10, 12, 14).

20. Segment de frein selon l'une quelconque des revendications 18 ou 19, **caractérisé en ce qu'**une plaque d'amortissement (26) recouvrant toutes les parties de plaque est collée sur la plaque de support (2).
